# EUROPÄISCHE PATENTSCHRIFT

(11) **EP 4 215 257 B1**
(45) Veröffentlichungstag und Bekanntmachung des Hinweises auf die Patenterteilung: **12.03.2025**
(21) Anmeldenummer: 23151882.0
(22) Anmeldetag: 17.01.2023
(51) Int. Cl.: B01D 29/60, B01D 35/143, B01D 37/04

(54) **VERFAHREN ZUR BESTIMMUNG DES VERSCHMUTZUNGSGRADES EINES FILTERS**
METHOD FOR DETERMINING THE CONTAMINATION LEVEL OF A FILTER
PROCÉDÉ DE DÉTERMINATION DU DEGRÉ D'ENCRASSEMENT D'UN FILTRE

(30) Priorität: 21.01.2022 DE 102022200673
(43) Veröffentlichungstag der Anmeldung: 26.07.2023
(73) Patentinhaber: Robert Bosch GmbH, 70442 Stuttgart (DE)
(72) Erfinder: Stephan, Lars, 74838 Limbach (DE); Bierod, Jan Lukas, 65520 Bad Camberg (DE)

(56) Entgegenhaltungen:
- DE-A1- 102020 105 403

## Beschreibung

Die vorliegende Erfindung betrifft ein Verfahren zur Bestimmung des Verschmutzungsgrades eines Filters sowie ein Steuergerät zur Durchführung eines solchen Verfahrens.

In bekannten Systemen ist die Verschmutzung von Filtern überwiegend lediglich durch die Differenz der Drücke vor und nach dem Filterelement bestimmt. Dies gilt insbesondere in hydraulischen Systemen, in denen nur Drucküberwachungen anhand von Schwellwerten vorhanden sind.

Die jeweiligen Druckschwellwerte zur Feststellung einer Verschmutzung sind dabei üblicherweise anwendungsbezogen festgelegt. Ein neues, nicht verschmutztes Filterelement ist bspw. an einer Druckdifferenz von kleiner 1 bar zu erkennen. Ab einer Druckdifferenz von 2,5 bar kann beispielsweise auf eine Verschmutzung von ca. 80 % geschlossen werden. Bei einer Druckdifferenz von 5 bar und darüber wird dann beispielsweise als Verschmutzung von 100 % bewertet.

Aufgetragen über die Lebensdauer verhält sich der auftretende Druckverlust an Filtern üblicherweise wie eine Art Exponentialfunktion. Dies liegt an der zunehmenden Verschmutzung, wobei durch die Verschmutzung der Filter schlechter durchlässig wird und dadurch immer schneller verschmutzt. Die Verschmutzung des Filters erhöht also die Verschmutzungsgeschwindigkeit, so dass hier eine positive Rückkopplung besteht, die ein vollständiges Verschmutzen des Filters bewirkt.

Die Überwachung der Verschmutzung eines Filters durch eine sensorische Drucküberwachung ist ein geeigneter Ansatz, der jedoch unter komplexen Bedingungen - wie beispielsweise wechselnden Drücken, plötzlich auftretenden Druckstößen, deutlichen Änderungen der auftretenden Volumenströme sowie einer Änderung der viskosen Eigenschaften der jeweiligen Fluide - teilweise nicht ausreichend verlässliche und/oder ungenügend genaue Ergebnisse liefert.

Die DE102020105403A1 beschreibt ein Verfahren zum Ermitteln des Verschmutzungsgrades eines Filterelements in einer Komponente eines fluidtechnischen Systems, welches die folgenden Schritte umfasst: Messen eines in der Komponente vorliegenden Differenzdrucks; Messen einer Temperatur eines durch das Filterelement strömenden Fluids; Ermitteln eines tolerierbaren Differenzdrucks unter Verwendung einer Wertematrix, in der experimentell bestimmte Differenzdrücke und Temperaturen bei zumindest einem vorgegebenen tolerierbaren Filter-Verschmutzungsgrad miteinander korreliert sind; Vergleichen des gemessenen Differenzdrucks mit dem ermittelten tolerierbaren Differenzdruck, und Abgeben eines Wartungshinweises, wenn der gemessene Differenzdruck den tolerierbaren Differenzdruck erreicht oder überschreitet. In der Wertematrix können mehrere Differenzdrücke erfasst sein, die etwa über mehrere Volumenströme, Temperaturen und zumindest einem tolerierbaren Verschmutzungsgrad des Filterelements aufgezeichnet sein könnten. Die Wertematrix ist mehrdimensional und kann einen Aufschluss über den Zusammenhang zwischen Differenzdruck und Verschmutzungsgrad bei bestimmten Betriebsbedingungen geben. Insbesondere aus der Kenntnis der Fluid-Temperatur kann aus der Wertematrix ein tolerierbarer Differenzdruck als Maximalwert ermittelt werden. Falls möglich könnte die Wertematrix auch mehrere Betriebsfälle des betrachteten fluidtechnischen Systems abbilden. Der tolerierbare Differenzdruck könnte für mehrere Betriebsfälle verschieden sein. Das Ermitteln des tolerierbaren Differenzdrucks könnte daher nicht nur auf Basis der gemessenen Temperatur durchgeführt werden, sondern auch auf Basis einer Information über den jeweiligen Betriebsfall. Auch wenn dies bereits eine Verbesserung der Situation bei einer reinen Drucküberwachung bedeutet, so ist eine stabilere und situativ qualitativ hochwertigere Bestimmung bzw. Bewertung des Verschmutzungsgrades des Filters wünschenswert.

Wünschenswert ist beispielsweise eine Möglichkeit, basierend auf einem ermittelten Verschmutzungsgrad eine Restlebensdauer des Filters möglichst genau zu berechnen.

Außerdem ist es wünschenswert, durch die Ermittlung des Verschmutzungsgrades ungeplante Stillstände durch kurzfristig notwendigen Wechsel des Filters möglichst zu vermeiden.

Darüber hinaus ist es wünschenswert, durch die Ermittlung des Verschmutzungsgrades das Risiko der Beschädigung im System durch unzureichende Wartungszyklen bzw. zu späte Durchführungen von Wartungsarbeiten bzw. Filtertausch zu vermeiden.

Eine Verschlechterung der Fluidqualität aufgrund verschmutzter Filterelemente sollte ebenfalls möglichst vermieden werden.

Darüber hinaus ist eine Erkennung von Beschädigungen oder Verschleiß im System wünschenswert.

Aufgabe der vorliegenden Erfindung ist es eine Überwachung der Verschmutzung eines Filters anhand künstlicher Intelligenz weiter zu verbessern, insbesondere auch mit dem Ziel, dass diese unter den beschriebenen besonderen Bedingungen wie wechselnden Drücken, wechselnder Fluidviskositäten etc. zuverlässig funktioniert und zum sicheren Betrieb des Systems mit dem Filter beiträgt. Insbesondere sollen die eingangs genannten Probleme bekannter Ansätze zumindest gelindert werden.

Dies wird gelöst mit der Erfindung gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann die einzelnen Merkmale in technologisch sinnvoller Weise miteinander kombiniert und damit zu weiteren Ausgestaltungen der Erfindung gelangt.

Hierzu trägt ein Verfahren zur Bestimmung des Verschmutzungsgrades eines Filters in einem hydraulischen System bei, welches wenigstens die folgenden Schritte umfasst:
a) Ermitteln eines Druckdifferenzwertes, welcher über den Filter auftritt.
b) Ermitteln von Rahmenbedingungen, die einen Zusammenhang zwischen dem Druckdifferenzwert und dem Verschmutzungsgrad beschreiben und die zumindest zeitweise während Schritt a) vorliegen,
c) Zuordnen von (ermitteltem) Druckdifferenzwert und (ermittelter) Rahmenbedingungen zu einem Muster (oder einer Anomalie) anhand einer in einem Speicher hinterlegten Musterdatenbank,
d) Ermitteln eines dem Muster zugeordneten Verschmutzungsgrades aus der in dem Speicher hinterlegten Musterdatenbank.

Das beschriebene Verfahren geht über eine reine Überwachung des aktuellen Zustands des Filters durch eine reine Beobachtung der auftretenden Druckdifferenz und des Abgleichs mit Schwellwerten hinaus.

Schwellwerte zum Abgleich mit der Druckdifferenz beruhen meist ausschließlich auf Erfahrungswerten und groben Kurven, die den Zusammenhang zwischen der Druckdifferenz und dem Verschmutzungsgrad beschreiben. Eine genaue Vorhersage ist nicht möglich, weil die den Zusammenhang zwischen Druckdifferenz und Verschmutzungsgrad beschreibenden Kurven insbesondere zu Beginn der Verschmutzung sehr flach sind und so geringe absolute Ungenauigkeiten schon zu sehr hohen falschen Angaben führen. Gegebenenfalls können Kennfelder vorgesehen sein, die an die jeweils vorliegenden Bedingungen angepasste Schwellwerte bereitstellen.

Insgesamt ist festzustellen, dass die Druckdifferenz von sehr vielen Störgrößen abhängig ist. Störgrößen, die hier hervorgehoben werden sollen, sind insbesondere die Viskosität in Abhängigkeit der Temperatur und Zusammenhänge zwischen Druck und Volumenstromänderungen oder die Wahl des jeweiligen Fluides - bspw. die Wahl bestimmter Öl-Klassen als Fluide.

Bisher wurden die zur Verfügung stehenden Parameter mit analytischen Methoden verarbeitet, um von auftretenden Druckdifferenzen auf den Verschmutzungsgrad des Filters zu schließen.

Dabei tritt allerdings die Schwierigkeit auf, dass die zur Verfügung stehenden Parameter regelmäßig große Datenmengen darstellen, deren Verarbeitung lange Rechenzeiten erfordert. Der Einfluss von Störgrößen ist groß und so ergeben sich recht ungenaue Aussagen. Filterwechsel müssen aufgrund dieser Unsicherheiten häufig bzw. früh (d.h. konservativ) getauscht werden, wodurch ein hoher Hardwareverbrauch, eine hohe Umweltbelastung und auch hohe Kosten entstehen. Häufig ist die Aussage über den Verschmutzungsgrad des Filters auch so ungenau, dass manuelle Prüfungen von Filtern erforderlich sind. Trotz alledem ist es möglich, dass Filterwechsel zu spät erfolgen, durch verschmutzte Filter Verschmutzungen im Fluid auftreten und ungeplante Stillstände erforderlich werden können.

Grundsätzlich ist möglich, dass die genannten Schritte des Verfahrens (wenigstens einmal) in der angegebenen Reihenfolge (wenigstens teilweise nacheinander) ausgeführt werden. Es ist möglich, dass die Schritte einander zeitweise überlagern oder sogar zeitparallel ausgeführt werden. Insbesondere das Ermitteln von unterschiedlichen Daten kann zeitlich überlagert und/oder unterschiedlich oft ausgeführt werden.

Schritt a) kann das Ermitteln eines konkreten Druckdifferenzwertes umfassen oder davon abgeleitete Größen. Es ist möglich, dass vorbestimmte Druckdifferenzbereiche und/oder Druckdifferenzänderungen klassifiziert sind, und die zugehörige Klasse bzw. die Klassengrenzwerte ermittelt werden. Das Ermitteln der Rahmenbedingungen kann sensorisch und/oder rechnerisch erfolgen.

Bei Schritt b) erfolgt das Ermitteln mindestens einer vorgegebenen Rahmenbedingungen, wobei ggf. eine Mehr- oder Vielzahl von unterschiedlichen von Rahmenbedingungen ermittelt werden kann. Es ist möglich, dass konkrete Werte einer Rahmenbedingung oder eine davon abgeleitete Größe davon ermittelt werden. Es ist möglich, dass vorbestimmte Rahmenbedingungen-Wertebereiche und/oder Rahmenbedingungen -Änderungen klassifiziert sind, und die zugehörige Klasse bzw. die Klassengrenzwerte ermittelt werden. Das Ermitteln der Rahmenbedingungen kann sensorisch und/oder rechnerisch erfolgen.

Weiter erfolgt gemäß Schritt c) ausgehend von mindestens einem (ermittelten) Druckdifferenzwert und mindestens einer (ermittelter) Rahmenbedingungen eine Zuordnung zu einem (vorbestimmten) Muster, wobei diese Zuordnung auf eine Musterdatenbank zugreift, die in einem Speicher hinterlegt ist. Ein Muster umfasst also Informationen zu dem Druckdifferenzwert und den Rahmenbedingungen, so dass dieses in Abhängigkeit der konkreten Werte automatisch auswählbar ist.

Schritt d) umfasst das Ermitteln eines dem (zugeordneten) Muster zugeordneten Verschmutzungsgrades, der sich ebenfalls aus der in dem Speicher hinterlegten Musterdatenbank ergibt. Damit ist ein Muster insbesondere ein Mehr-Parameter-Muster, bei dem mindestens zwei Eingangsgrößen (hier Druckdifferenzwert und Rahmenbedingung(en)) zu einer vorbestimmten Ausgangsgröße (hier der Verschmutzungsgrad) führt.

Kann in Schritt c) oder d) kein Muster zugeordnet werden, so gilt dies vorerst als Anomalie. Bei mehrfachen Auftreten dieses Musters, wird dieses gelabelt, sodass künftig ähnliche Datenpunkte diesem Muster zugeordnet werden können.

Für den Aufbau der in dem Speicher hinterlegten in Schritt c) verwendeten Musterdatenbank erfolgt die Sammlung einer Mindestmenge von Datentripeln umfassend Druckdifferenzwerte, Rahmenbedingungsdaten betreffend auftretende Rahmenbedingungen und Informationen betreffend jeweils vorliegender Verschmutzungsgrade.

Für den Aufbau der in dem Speicher hinterlegten Musterdatenbank ist die Zuordnung von Datentripeln zu Clustern umfasst.

Vorteilhaft ist, wenn die Cluster entlang einer Kurve zugeordnet werden, die den erwarteten Verlauf der Druckdifferenzwerte über eine Lebensdauer des Filters beschreibt.

Besonders vorteilhaft ist, wenn für den Aufbau der in dem Speicher hinterlegten in Schritt c) verwendeten Musterdatenbank ein automatisch lernender Algorithmus verwendet wird, der die Datentripel verarbeitet und Clustern zuordnet.

Cluster können entlang einer Kurve ausgebildet sein, die den erwarteten Verlauf der Druckdifferenzwerte über eine Lebensdauer des Filters beschreiben.

Die Bildung von Clustern und der Aufbau der Musterdatenbank erfolgt bevorzugt in einem Initialisierungsbetrieb, der auch als Synthesebetrieb oder Anlernbetrieb bezeichnet werden kann. Die initiale Bildung von Clustern und der Aufbau der Musterdatenbank kann auch als Anlernen des Algorithmus für die jeweilige Applikation verstanden werden.

Als Ausgangspunkt für das Anlernen des Algorithmus werden Messdaten bzw. eine Datenbasis eingelesen. Bevorzugt ergeben eben diese Messdaten bzw. diese Datenbasis eine Kurve Druckdifferenz über Zeit für den jeweiligen Filter, basierend auf historischen Daten bzw. basierend auf der Datenbasis.

Anhand der nun vorliegenden Kurve (Druckdifferenz über Zeit) werden die Daten mit Hilfe von Clustering-Algorithmen kategorisiert, so dass Objekte in demselben Cluster gruppiert werden, wenn sie nach bestimmten Metriken ähnlich sind. Über den zeitlichen Verlauf der Lebenserwartung werden beispielsweise zwischen drei und acht, bevorzugt fünf verschiedene Cluster gebildet, die jeweils für ein Zeitintervall der Lebenserwartung des Filters stehen.

Mit dem hier beschriebenen Ansatz wird nun also die beschriebene Musterdatenbank verwendet, welche anhand der Druckdifferenzwerte sehr effizient ausgewertet werden kann, um unter Berücksichtigung verfügbarer Informationen betreffend die Rahmenbedingungen einen konkreten (aktuellen) Verschmutzungsgrad bestimmen zu können.

Im Hinblick auf Rahmenbedingungen, die in der Musterdatenbank hinterlegt sind, ist darauf hinzuweisen, dass es sich hier um aktuelle (zum Zeitpunkt der Bestimmung des Druckdifferenzwertes vorliegende) Rahmenbedingungen handeln kann. Es kann sich aber auch um historische Rahmenbedingungen handeln wie beispielsweise Informationen betreffend das verwendete Fluid, bspw. eine bestimmte Ölqualität. Je nach verwendeter Ölqualität in dem Zeitraum vor der Bestimmung des Druckdifferenzwertes kann der Druckdifferenzwert bspw. auf einen anderen (abweichenden) Verschmutzungsgrad hindeuten.

Mit dem hier beschriebenen Ansatz werden nun Methoden des maschinellen Lernens bzw. numerische Methoden verwendet, um große Datenmengen bestehend aus den beschriebenen Datentripeln im Voraus zum Aufbau einer Musterdatenbank zu verwenden. Zur Erzeugung der Musterdatenbank kann unproblematisch ein größerer Rechenaufwand aufgebracht werden, weil die Erzeugung der Musterdatenbank vorab (ggf. auch mit einer Simulation) auf einer speziell hierfür vorgesehenen Hardware erfolgen kann. Die insgesamt in der Musterdatenbank enthaltene Datenmenge kann auch sehr stark gegenüber der in den beschriebenen Datentripeln enthaltenen Rohdatenmenge reduziert sein. Bei der Erstellung der Musterdatenbank erfolgt bevorzugt eine Art Informationsextraktion, bei der Informationen aus den Datentripeln extrahiert werden und in der Musterdatenbank so aufbereitet werden, dass die Frage, bei welchem Druckabfall und bei welchen Rahmenbedingungen mit welchem Verschmutzungsgrad des Filters zu rechnen ist, anhand der Musterdatenbank effizient, mit geringem Rechenaufwand beantwortet werden kann. Dabei ist die Musterdatenbank nach der Erstellung nicht statisch und kann somit stetig erweitert und verbessert werden. Die Durchführung des beschriebenen Verfahrens kann daher auch in einem (kleinen) hierfür vorgesehenen Steuergerät mit (verhältnismäßig geringer) Rechenleistung, wobei hier mit "verhältnismäßig gering" insbesondere gemeint ist, dass die Rechenleistung im Vergleich zu der Rechenleistung von Hardware zum Aufbau der Musterdatenbank sehr klein (d.h. bis zu 100 mal kleiner oder sogar bis zu 1.000 mal kleiner) sein kann.

Der beschriebene Ansatz zum Aufbau einer Musterdatenbank und zur Ermittlung des Verschmutzungsgrades basierend auf dieser Musterdatenbank ist insbesondere zur Beseitigung von Störgrößen hoch effizient. Solche Störgrößen sind üblicherweise in den in Schritt b) ermittelten Rahmenbedingungen enthalten und können in der Musterdatenbank bzw. beim Aufbau der Musterdatenbank effizient mit berücksichtigt werden. Auch wenn eine Rahmenbedingung einer starken Störung unterliegt, liefert die Musterdatenbank eine passende Information betreffend den Verschmutzungsgrad, weil derartige Störgrößen beim Aufbau der Musterdatenbank effizient mit berücksichtigt wurden.

Es ist vorteilhaft, wenn ausgehend von dem in Schritt c) zugeordneten Muster und/oder dem in Schritt d) ermittelten Verschmutzungsgrad in Schritt e) eine Restlebensdauer des Filters bestimmt wird.

Vorteilhaft ist, wenn in Schritt e) eine Filterwechselaufforderung ausgegeben wird, wenn der in Schritt d) ermittelte Verschmutzungsgrad einen Grenzwert überschreitet.

Die in Schritt c) verwendete Musterdatenbank kann in vorteilhafter Weise in einem Feldbetrieb aktualisierbar sein.

Bevorzugt ist die verwendete Musterdatenbank also auch aktualisierbar. Beispielsweise kann ein Steuergerät zur Durchführung des beschriebenen Verfahrens bei Wartungsintervallen aktualisiert werden, um eine neue/aktualisierte Musterdatenbank zu empfangen, so dass das Verfahren dann mit der aktualisierten Musterdatenbank ausgeführt wird.

In weiteren bevorzugten Ausführungsvarianten ist das beschriebene Verfahren selbst Teil eines konstanten Verbesserungsprozesses der Musterdatenbank, bspw. bei einem Filterwechsel können gegebenenfalls direkt tatsächliche Verschmutzungsdaten festgestellt werden. Gegebenenfalls können während oder kurz vor dem Filterwechsel festgestellte Druckabfalldaten und Rahmenbedingungen mit den tatsächlichen Verschmutzungsdaten zusammen als Datentripel in einen Algorithmus zur Verbesserung der Musterdatenbank eingegeben werden.

Insgesamt kann so ein konstanter Verbesserungsprozess gebildet sein, der bevorzugt einen selbstlernenden Algorithmus bildet, der sich bzw. die der Erkennung des Verschmutzungsgrades zu Grunde liegende Musterdatenbank immer weiter anpasst, je mehr Daten zu Verfügung stehen.

Je besser bzw. umfangreicher der Algorithmus bzw. die Musterdatenbank, desto besser ist die Vorhersage des Verschmutzungsgrades. Insbesondere können anhand der Musterdatenbank Anomalien und Zusammenhänge zwischen Druckabfall, Rahmenbedingungen und dem Verschmutzungsgrad erkannt, abgebildet und berücksichtigt werden, die für den Menschen nicht oder nur schwer nachvollziehbar sind.

Gemäß einem weiteren Aspekt wird ein Steuergerät vorgeschlagen, welches zur Durchführung des beschriebenen Verfahrens eingerichtet ist.

Es soll darauf hingewiesen werden, dass die im Zusammenhang mit dem vorstehend beschriebenen Verfahren geschilderten besonderen Vorteile und Ausgestaltungsmerkmale auch auf das im Folgenden beschriebene Steuergerät anwendbar und übertragbar sind.

Die Erfindung sowie das technische Umfeld der Erfindung werden nachfolgend anhand der Figuren näher erläutert. Die Figuren zeigen bevorzugte Ausführungsbeispiele, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen:
- Fig. 1:: ein typisches hydraulisches System mit Filtern,
- Fig. 2:: ein Ablaufdiagramm des beschriebenen Verfahrens,
- Fig. 3:: ein Diagramm, welches einen erwarteten Druckanstieg über die Zeit in Folge von Verschmutzungen beschreibt,
- Fig. 4:: Datencluster einer Musterdatenbank,
- Fig. 5:: schematisch eine Vorhersage einer verbleibenden Filterlebensdauer, festgestellt mit dem beschriebenen Verfahren, und
- Fig. 6:: eine durch das beschriebene Verfahren erzielbare Kostenoptimierung.

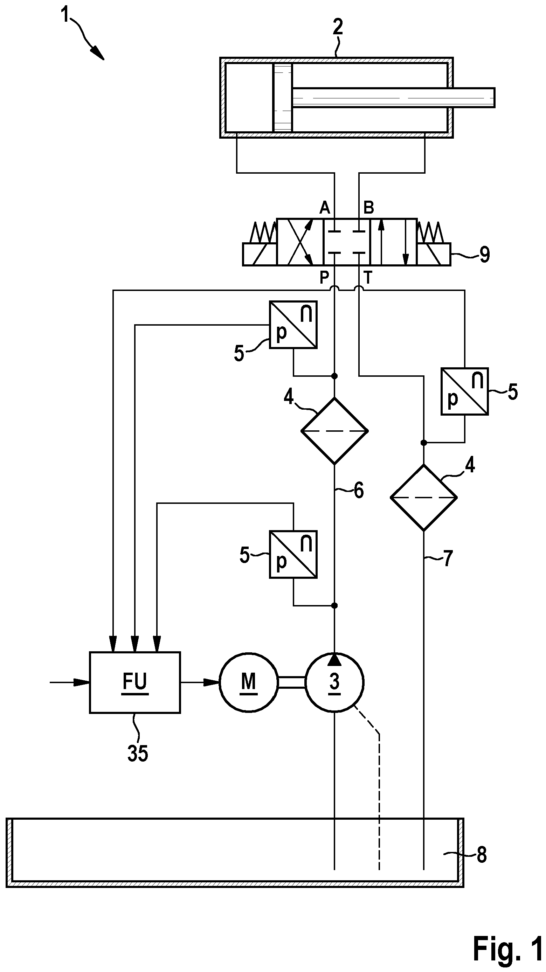

Fig. 1 zeigt ein hydraulisches System 1 mit einer angetriebenen hydraulischen Komponente 2, einer Pumpe 3 zur Erzeugung eines Drucks des Hydraulikventils, einer Hinlaufleitung 6, einer Rücklaufleitung 7 und einem Reservoir 8 für Hydraulikfluid. In der Hinlaufleitung 6 und in der Rücklaufleitung 7 sind jeweils Filter 4 eingebaut. Mit den Drucksensoren 5 kann eine Druckdifferenz über die jeweiligen Filter 4 ermittelt werden. Die Filter 4 dienen zur Sicherstellung der Ölreinheit. Diese sind häufig an drei verschiedenen Positionen zu finden, wobei grundsätzlich zwei verschiedene Einbauweisen auftreten und üblich sind, die hier beide beschreiben sind.

Es gibt Filter 4, die bspw. nach einer Pumpe 3 und vor der hydraulischen Steuerung 9 verbaut sind, um die sensible Steuerung 9 vor einer Verschmutzung zu schützen. Bei solchen Filtern 4 liegt üblicherweise auf beiden Seiten ein (definierter) Druck an. Es werden daher üblicherweise zwei Drucksensoren 5 verwendet, um die Druckdifferenz bzw. Temperatur zu bestimmen - ein erster Drucksensor 5 auf der einen Seite des Filters 4 und ein zweiter Drucksensor 5 auf der zweiten Seite des Filters 4. Eine solche Anordnung ist hier in der Hinlaufleitung 6 gezeigt. Die Drucksensoren 5 sind an ein Steuergerät bzw. die Maschinensteuerung 35 zur Durchführung des beschriebenen Verfahrens angeschlossen.

Es gibt des weiteren Rücklauffilter 4 bzw. By-Pass Filter 4, die beispielsweise in einer Rücklaufleitung 7 verbaut sind um das in das Reservoir 8 zurückströmende Fluid zu reinigen. Da auf der Seite des Reservoirs 8 atmosphärischer Druck vorliegt, muss hierbei nur ein Sensor 5 verwendet werden, um Differenzdruck zu bestimmen. Für die zum Reservoir 8 hin ausgerichtete Seite des Filters 4 kann einfach der Atmosphärendruck angenommen werden.

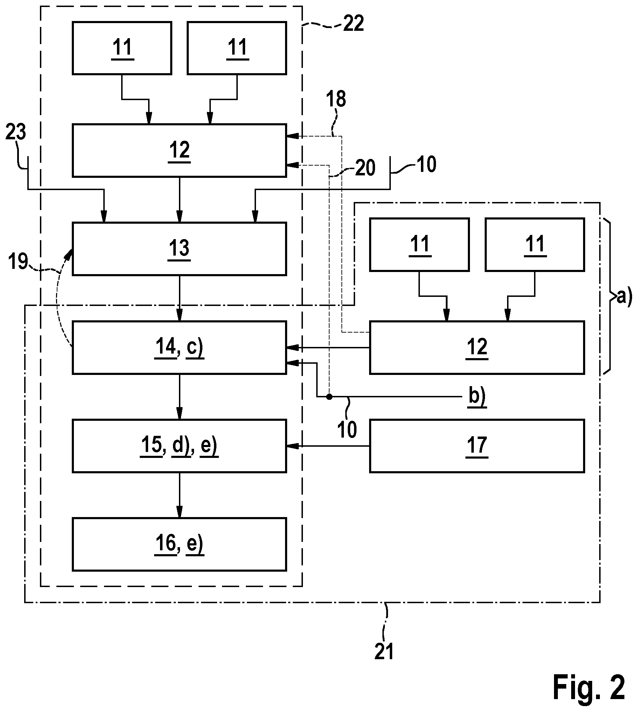

Anhand von Fig. 2 wird nun der Ablauf des beschriebenen Verfahrens dargestellt. Die Darstellung in Fig. 2 kombiniert zwei verschiedene Aspekte des beschriebenen Verfahrens. In der Fig. 2 ist der Feldbetrieb 21 dargestellt, in welchem das beschriebene Verfahren angewendet wird, um den Verschmutzungsgrad 15 eines Filters 4 zu bestimmen. Der Feldbetrieb 21 ist das eigentliche hier durchgeführte und beschriebene Verfahren. Dieser Feldbetrieb 21 wird beispielsweise in der Steuerung 35 einer hydraulischen Anlage ausgeführt. In der Fig. 2 weiter dargestellt ist ein Initialisierungsbetrieb 22 (oder auch Synthesebetrieb), der dem Zweck dient, eine Musterdatenbank 14 aufzubauen bzw. zu synthetisieren, die für die Durchführung des Feldbetriebs 21 in Schritt c) benötigt wird. Der Initialisierungsbetrieb 22 bzw. Synthesebetrieb ist dem hier beschriebenen Verfahren vorgelagert und kann bei einer übergeordneten Betrachtungsweise als Teilaspekt des beschriebenen Verfahrens verstanden werden. Beide Aspekte/Verfahren (Feldbetrieb 21 und Initialisierungsbetrieb 22) haben identische Schritte, die hier auch für beide Aspekte/Verfahren gemeinsam dargestellt sind.

Sowohl der Feldbetrieb 21 als auch der Initialisierungsbetrieb 22 beginnen mit der Erfassung von Druckwerten 11 mit Hilfe von Drucksensoren, aus denen dann Druckdifferenzwerte 12 gebildet werden, die die Druckdifferenz über den Filter 4 beschreiben. Die jeweiligen Druckdifferenzwerte 12 sind immer im Kontext der jeweiligen Rahmenbedingungen 10 zu sehen. Rahmenbedingungen 10 sind hier beispielsweise der anliegende Volumenstrom durch den Filter 4, die Viskosität des jeweiligen Fluids etc. Die Rahmenbedingungen 10 können auf verschiedene Arten berücksichtigt werden, von denen einige hier beispielhaft aufgeführt sind:
- Die Rahmenbedingungen 10 können mit Messungen erfasst werden.
- Die Rahmenbedingungen 10 können aus anderen verfügbaren Parametern berechnet werden, oder
- Die Rahmenbedingungen 10 können fest hinterlegt bzw. festgelegt sein. Diese Ausführungsvariante ist insbesondere möglich, wenn die Rahmenbedingungen 10 sich nicht ändern.

Im Initialisierungsbetrieb 22 wird mit den Druckdifferenzwerten 12 und den Rahmenbedingungen 10 sowie jeweils entsprechenden Verschmutzungsdaten 23 nun ein Clustering 13 durchgeführt und erstmalig eine Musterdatenbank 14 aufgebaut, die Datentripel 33 bestehend aus Rahmenbedingungsdaten betreffend Rahmenbedingungen 10, Druckabfalldaten bestehend aus Druckdifferenzwerten 12 und einem jeweils damit einhergehenden Verschmutzungsgrad 15 beschrieben durch Verschmutzungsdaten 23 enthält. Anhand dieser Musterdatenbank 14 kann, für vorliegende im Feldbetrieb 21 dann für einen vorliegenden Druckabfall (beschrieben durch einen Druckdifferenzwert 12) bei vorliegenden/bekannten Rahmenbedingungen 10, ein Verschmutzungsgrad 15 ermittelt werden.

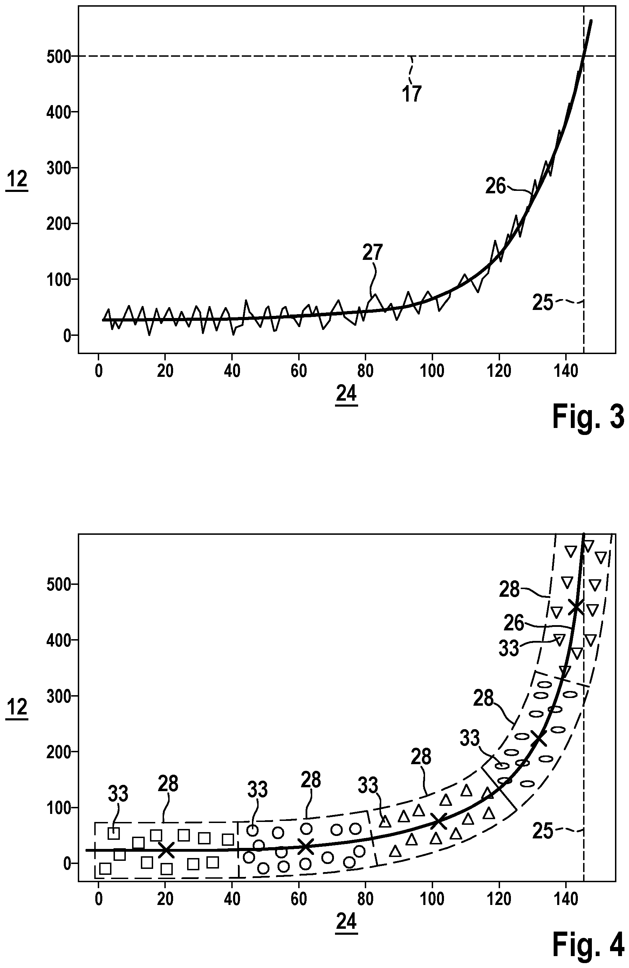

Druckdifferenzwerte 12, Rahmenbedingungen 10 und Verschmutzungsdaten 23 bilden in der Musterdatenbank 14 jeweils Datentripel 33. Die in der Musterdatenbank 14 hinterlegten Datentripel 33 werden mit Hilfe des Clusterings 13 einer vorher bestimmten erwarteten Kurve der Druckdifferenz über die Gesamtbetriebszeit des Filters 4 zugeordnet, die im Folgenden anhand der Fig. 3 bis 5 noch näher beschrieben wird. Anhand des Clusterings 13 bzw. der Cluster 28 ist die effiziente Zuordnung von ermittelten Druckdifferenzwerten 12 bzw. Rahmenbedingungen 10 zu einem bestimmten Verschmutzungsgrad 15 möglich. In bevorzugten Ausführungsvarianten ist für alle Druckdifferenzwerte 12 bzw. Rahmenbedingungen 10 in einem Cluster 28 ein (gemeinsamer, mittlerer) Verschmutzungsgrad 15 hinterlegt, der in Schritt d) des beschriebenen Verfahrens im Feldbetrieb 21 dann ermittelt werden kann.

In Fig. 2 auch dargestellt ist nun, dass nachfolgend zu Schritt d) auch ein Vergleich des Verschmutzungsgrades 15 mit einem Grenzwert 17 erfolgen kann und je nachdem, ob der Verschmutzungsgrad 15 den Grenzwert 17 übersteigt, dann auch eine Filterwechselaufforderung 16 ausgegeben wird.

Fig. 2 zeigt ebenfalls, dass der Feldbetrieb 21 und der Initialisierungsbetrieb 22 bzw. der Synthesebetrieb auch ineinander übergehen können. Es ist beispielsweise möglich, dass aus dem Feldbetrieb 21 Druckdifferenzdaten 18 und Rahmenbedingungsdaten 20 auch in einen parallel zum Feldbetrieb 21 stattfindenden Initialisierungsbetrieb 22 einfließen und zur Verbesserung der Musterdatenbank 14 verwendet werden. Bevorzugt fließen in diesen Initialisierungsbetrieb 22 bzw. Synthesebetrieb dann auch Musterauswahldaten 19 ein, die anzeigen, welche Muster in Schritt c) zugeordnet wurden und welche Verschmutzungsgrade 15 hierdurch ermittelt wurden. Durch die Verwertung all dieser Daten können das Clustering 13 und die Musterdatenbank 14 kontinuierlich verbessert und bis zu dem Messzeitpunkt unbekannte Muster mit eingebunden werden. Diese Verarbeitung von Daten aus dem Feldbetrieb 21 zur Verbesserung der Datenbasis (der Musterdatenbank 14) findet gegebenenfalls kontinuierlich während des Betriebes statt. Gegebenenfalls findet diese Verbesserung der Datenbasis auch sporadisch statt, in dem Daten aus dem Feldbetrieb 21 zu diversen Zeitpunkten ausgelesen und einer zentralen Einheit (bspw. einem Server) zugeordnet werden, um dann zur Verbesserung der Musterdatenbank 14 verwendet zu werden. Hier können ggf. auch Verschmutzungsdaten 23 mit einfließen, die während eines Feldbetriebs 21 beim Wechsel des Filters 4 tatsächlich festgestellt wurden (ggf. durch Anschauung eines Monteurs, der den Filter 4 wechselt). Die verbesserte Musterdatenbank 14 kann dann sporadisch (zu diversen Zeitpunkten) bspw. in Form eines Updates in ein Steuergerät eingespielt werden, welches den Feldbetrieb 21 durchführt.

Fig. 3 zeigt eine Kurve 26, die einen erwarteten Verlauf des Druckdifferenzwertes 12 während der Lebensdauer 25 des Filters 4 darstellt. Die Lebensdauer 25 des Filters 4 ist auf der Zeitachse 24 dargestellt. Die Kurve 26 stellt diesen erwarteten Verlauf unter der Annahme konstanter Rahmenbedingungen 10 dar. In Fig. 3 beispielhaft auch aufgezeichnet ist ein tatsächlicher Druckverlauf 27. Insbesondere aufgrund von wechselnden Rahmenbedingungen 10 schwankt dieser tatsächliche Druckverlauf 27 um die Kurve 26. Der Druckdifferenzwert 12 über den Filter 4 steigt mit der Alterung des Filters 4 immer weiter an. Dieser Anstieg erfolgt (näherungsweise) gemäß einer Exponentialfunktion. Der Verschmutzungsgrad 15 kann anhand des Druckdifferenzwertes 12 eingeordnet werden. Der Zusammenhang zwischen Verschmutzungsgrad 15 und Druckdifferenzwert 12 kann (muss aber nicht) linear sein. Die Eigenschaft einer Exponentialfunktion ist insbesondere dadurch bedingt, dass mit steigendem Verschmutzungsgrad 15 normalerweise die Verschmutzung immer schneller ansteigt, insbesondere weil die Durchlässigkeit des Filters 4 sinkt. Die Verschmutzung des Filters 4 kann also als positiv rückgekoppelter Prozess verstanden werden. Fig. 3 zeigt schematisch auch einen Grenzwert 17. Wenn die Verschmutzung bzw. der Druckdifferenzwert 12 diesen Grenzwert 17 erreicht, soll eine Filterwechselaufforderung 16 ausgegeben werden. Auch bereits vor Erreichen des Grenzwertes 17 können Vorhersagen über die verbleibende Lebensdauer des Filters ausgegeben werden. Je nach Einordnung in das Cluster 28, muss jedoch aufgrund von Messungenauigkeiten eine variierende Toleranz ausgegeben werden (je größer der Verschmutzungsgrad 15, desto kleiner die Toleranz).

Anhand von Fig. 4 ist nun das Clustering 13 erläutert. Hier ist ebenfalls die Kurve 26 des Druckdifferenzwertes 12 über die Lebensdauer 25 des Filters 4 auf der Zeitachse 24 aufgetragen. Verschiedene Datentripel 33 bestehend aus Druckdifferenzwerten 12, Rahmenbedingungen 10 und zugeordneten Verschmutzungsdaten 23 sind hier in Cluster 28 aufgeteilt, die entlang des Verlaufs der Kurve 26 liegen. Durch die Zuordnung von Datentripeln 33 zu Clustern 28 kann zu jedem Cluster 28 effizient ein zugeordneter Verschmutzungsgrad 15 ermittelt werden.

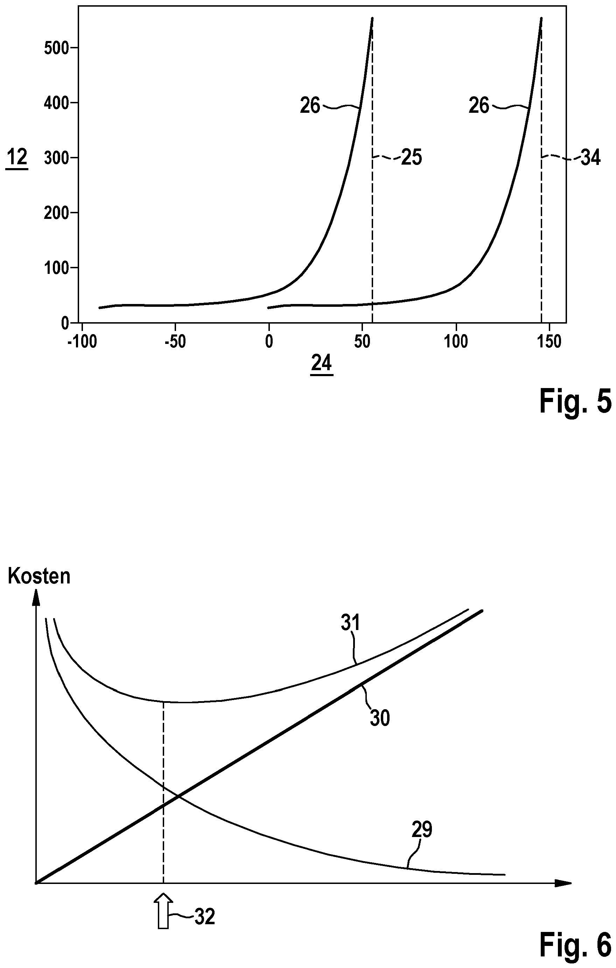

Fig. 5 zeigt nun, wie anhand der Kurve 26 und des Clusterings 13 eine Korrektur der Lebensdauer 25 des Filters 4 im Feldbetrieb 21 erfolgen kann. Hier dargestellt ist beispielsweise eine erste Kurve 26. Anhand der Cluster 28 kann nun festgestellt werden, in welchem Bereich der Kurve 26 sich der Druckdifferenzwert 12 bzw. der Verschmutzungsgrad 15 gerade befindet. Sollte der Filter 4 noch nicht so verschmutzt sein, wird dies anhand des (unerwartet) niedrigen Druckdifferenzwertes 12 bestimmt und die Kurve 26 kann zeitlich verschoben werden, so dass eine korrigierte Lebensdauer 34 ermittelt werden kann.

Fig. 6 zeigt wie durch das beschriebene Verfahren eine Optimalwert 32 der Wirtschaftlichkeit bei Filterwechseln erreicht werden kann. Dargestellt sind die Stillstandskosten 29, die auftreten, wenn das hydraulische System 1 in Folge eines Filterwechsels stillsteht. Ebenfalls dargestellt sind Lagerhaltungskosten 30, die durch die Lagerung von Filtern 4 entstehen sowie Gesamtkosten 31, die sich aus Stillstandskosten 29 und Lagerhaltungskosten 30 zusammensetzen. Durch das beschriebene Verfahren kann erreicht werden, dass hier ein Optimalwert 32 minimaler Gesamtkosten 31 erreicht wird.

### Bezugszeichenliste

- 1: Hydraulisches System
- 2: Hydraulische Komponente
- 3: Pumpe
- 4: Filter
- 5: Drucksensor
- 6: Hinlaufleitung
- 7: Rücklaufleitung
- 8: Reservoir
- 9: Steuerung
- 10: Rahmenbedingungen
- 11: Druckwert
- 12: Druckdifferenzwert
- 13: Clustering
- 14: Musterdatenbank
- 15: Verschmutzungsgrad
- 16: Filterwechselaufforderung
- 17: Grenzwert
- 18: Druckdifferenzdaten
- 19: Musterauswahldaten
- 20: Rahmenbedingungsdaten
- 21: Feldbetrieb
- 22: Initialisierungsbetrieb
- 23: Verschmutzungsdaten
- 24: Zeitachse
- 25: Lebensdauer
- 26: Kurve
- 27: tatsächlicher Druckverlauf
- 28: Cluster
- 29: Stillstandskosten
- 30: Lagerhaltungskosten
- 31: Gesamtkosten
- 32: Optimalwert
- 33: Datentripel
- 34: korrigierte Lebensdauer
- 35: Steuergerät

## Patentansprüche

1. Verfahren zur Bestimmung des Verschmutzungsgrades (15) eines Filters (4) in einem hydraulischen System (1), aufweisend zumindest die folgenden Schritte:
a) Ermitteln eines Druckdifferenzwertes (12), welcher über den Filter (4) auftritt;
b) Ermitteln von Rahmenbedingungen (10), die einen Zusammenhang zwischen dem Druckdifferenzwert (12) und dem Verschmutzungsgrad (15) beschreiben und die während des ermittelten Druckdifferenzwertes (12) vorliegen;
c) Zuordnen des Druckdifferenzwertes (12) und der Rahmenbedingungen (10) zu einem Muster anhand von einer in einem Speicher hinterlegten Musterdatenbank (14), wobei für den Aufbau der in dem Speicher hinterlegten verwendeten Musterdatenbank (14) die Sammlung einer Mindestmenge von Datentripeln (33), umfassend
- Druckdifferenzwerte (12),
- Rahmenbedingungsdaten (20) betreffend auftretende Rahmenbedingungen (10), und
- Informationen betreffend jeweils vorliegender Verschmutzungsgrade (15) erfolgt;
d) Ermitteln eines dem Muster zugeordneten Verschmutzungsgrades (15) aus der in dem Speicher hinterlegten Musterdatenbank (14),
**dadurch gekennzeichnet, dass**
der Aufbau der in dem Speicher hinterlegten Musterdatenbank (14) die Zuordnung von Datentripeln (33) zu Clustern (28) umfasst.

2. Verfahren nach Anspruch 1, wobei die Cluster (28) entlang einer Kurve (26) zugeordnet werden, die den erwarteten Verlauf der Druckdifferenzwerte (12) über eine Lebensdauer (25) des Filters (4) beschreibt.

3. Verfahren nach Anspruch 1, wobei für den Aufbau der in dem Speicher hinterlegten in Schritt c) verwendeten Musterdatenbank (14) ein automatisch lernender Algorithmus verwendet wird, der die Datentripel (33) verarbeitet und Clustern (28) zuordnet.

4. Verfahren nach Anspruch 3, wobei Cluster (28) entlang einer Kurve (26) ausgebildet sind, die den erwarteten Verlauf der Druckdifferenzwerte (12) über eine Lebensdauer (25) des Filters (4) beschreibt.

5. Verfahren nach einem der vorhergehenden Ansprüche, wobei ausgehend von dem in Schritt c) zugeordneten Muster und/oder dem in Schritt d) ermittelten Verschmutzungsgrad (15) in Schritt e) eine Restlebensdauer des Filters (4) bestimmt wird.

6. Verfahren nach einem der vorhergehenden Ansprüche, wobei in Schritte e) ein Filterwechselaufforderung (16) ausgegeben wird, wenn der in Schritt d) ermittelte Verschmutzungsgrad (15) einen Grenzwert (17) überschreitet.

7. Verfahren nach einem der vorhergehenden Ansprüche, wobei die in Schritt c) verwendete Musterdatenbank (14) in einem Feldbetrieb (21) aktualisierbar wird.

8. Steuergerät (35), eingerichtet zur Durchführung des Verfahrens nach einem der vorhergehenden Ansprüche.

## Claims

1. Method for determining the degree of contamination (15) of a filter (4) in a hydraulic system (1), comprising at least the following steps:
a) ascertaining a pressure difference value (12) which occurs across the filter (4);
b) ascertaining boundary conditions (10) which describe a relationship between the pressure difference value (12) and the degree of contamination (15) and which are present during the determined pressure difference value (12);
c) assigning the pressure difference value (12) and the boundary conditions (10) to a pattern based on a pattern database (14) stored in a memory, wherein, to build the used pattern database (14) stored in the memory, a minimum amount of data triples (33), comprising
- pressure difference values (12),
- boundary condition data (20) relating to arising boundary conditions (10), and
- information relating to the respective degree of contamination (15) present, are collected;
d) ascertaining a degree of contamination (15) assigned to the pattern from the pattern database (14) stored in the memory,
**characterized in that**
the building of the pattern database (14) stored in the memory comprises the assignment of data triples (33) to clusters (28).

2. Method according to Claim 1, wherein the clusters (28) are assigned along a curve (26) which describes the expected profile of the pressure difference values (12) over a lifetime (25) of the filter (4).

3. Method according to Claim 1, wherein, to build the pattern database (14) stored in the memory and used in step c), an automatically learning algorithm which processes the data triples (33) and assigns same to clusters (28) is used.

4. Method according to Claim 3, wherein clusters (28) are formed along a curve (26) which describes the expected profile of the pressure difference values (12) over a lifetime (25) of the filter (4).

5. Method according to any one of the preceding claims, wherein, in step e), a residual lifetime of the filter (4) is determined based on the pattern assigned in step c) and/or the degree of contamination (15) ascertained in step d).

6. Method according to any one of the preceding claims, wherein, in step e), a filter change request (16) is output if the degree of contamination (15) ascertained in step d) exceeds a limit value (17).

7. Method according to any one of the preceding claims, wherein the pattern database (14) used in step c) can be updated in field operation (21).

8. Controller (35) set up to perform the method according to any one of the preceding claims.

## Revendications

1. Procédé pour déterminer le degré d'encrassement (15) d'un filtre (4) dans un système hydraulique (1), comprenant au moins les étapes suivantes :
a) détermination d'une valeur (12) de différence de pression qui se produit à travers le filtre (4) ;
b) détermination de conditions générales (10) qui décrivent une relation entre la valeur (12) de différence de pression et le degré d'encrassement (15) et qui sont présentes pendant la détermination de la valeur (12) de différence de pression ;
c) association de la valeur (12) de différence de pression et des conditions générales (10) à un modèle à partir d'une base de données de modèles (14) stockée dans une mémoire, la collecte d'une quantité minimale de triplets de données (33), effectuée pour la constitution de la base de données modèle (14) utilisée, stockée dans la mémoire, comprenant
- des valeurs de différence de pression (12),
- des données de conditions générales (20) concernant les conditions générales (10) qui se produisent, et
- des informations concernant les degrés de pollution (15) existants ;
d) détermination d'un degré d'encrassement (15) associé au modèle à partir de la base de données de modèles (14) stockée dans la mémoire,
**caractérisé en ce que**
la constitution de la base de données de modèles (14) stockée dans la mémoire comprend l'association de triplets de données (33) à des clusters (28).

2. Procédé selon la revendication 1, dans lequel les clusters (28) sont associés le long d'une courbe (26) décrivant l'évolution attendue des valeurs de différence de pression (12) en fonction d'une durée de service (25) du filtre (4).

3. Procédé selon la revendication 1, dans lequel, pour la constitution de la base de données de modèles (14) stockée dans la mémoire et utilisée à l'étape c), il est utilisé un algorithme à apprentissage automatique qui traite les triplets de données (33) et les associe à des clusters (28).

4. Procédé selon la revendication 3, dans lequel des clusters (28) sont formés le long d'une courbe (26) qui décrit l'évolution attendue des valeurs de différence de pression (12) en fonction d'une durée de service (25) du filtre (4).

5. Procédé selon l'une des revendications précédentes, dans lequel, à partir du modèle attribué à l'étape c) et/ou du degré d'encrassement (15) déterminé à l'étape d), il est déterminé à l'étape e) une durée de service résiduelle du filtre (4).

6. Procédé selon l'une des revendications précédentes, dans lequel, à l'étape e), on émet une demande (16) de changement de filtre lorsque le degré d'encrassement (15) déterminé à l'étape d) dépasse une valeur limite (17).

7. Procédé selon l'une des revendications précédentes, dans lequel la base de données de modèles (14) utilisée à l'étape c) est apte à être mise à jour lors d'un fonctionnement sur le terrain (21).

8. Appareil de commande (35), agencé pour mettre en œuvre le procédé selon l'une des revendications précédentes.
